# EUROPEAN PATENT APPLICATION

(11) **EP 2 647 758 A1**
(43) Date of publication of application: **09.10.2013**
(21) Application number: 12163058.6
(22) Date of filing: 03.04.2012
(51) Int. Cl.: D21B 1/00, D21H 11/12, D21J 1/00, C08J 5/04

(54) **Methods for making composite materials from musa genus pseudostems agricultural waste**

(71) Applicant: Love Garcia, Ian Alan, 38208 La Laguna (ES)
(72) Inventor: Love Garcia, Ian Alan, 38208 La Laguna (ES)
(74) Representative: Pons Ariño, Angel

(57) **Abstract**

The present invention provides practical methods for the industrial production of fibre reinforced composites utilizing wastes from the intensive agriculture of musa genus, bananas, plantains, abaca etc. These methods describe ways for the extraction of the fibres from the dried pseudostem's ligno- cellulose matrix and using the ligno- cellulose matrix in turn to produce a reactive adhesive resin that can encapsulate the obtained fibres to produce a fibre reinforced composite material which can be biodegraded by microorganisms.

## Description

### Technical Field

The invention relates to the field of composite materials and in particular to different methods for producing them from musa genus pseudostems agricultural waste.

### Background Art

World cultivation of musa genus (bananas, plantains, abaca etc.) is a cheap and abundant source of cellulose and fibres. Bananas and plantains are one of the largest fruit crops grown in the world mainly in the tropical belts where there is enough water and warm temperatures. World production is estimated to be around 30 million tons per annum. There are different varieties from the musa genus all having in common they are large rhizomatous herbaceous flowering plants with a pseudostem formed by a outer cortex of overlapping leaf sheaths on an inner core floral stem. The outer cortex leaf sheaths contain thick fibres which give support to the large leaves that emerge at the top crown of the plant whilst the inner core is composed by densely packed thin fibres.

The pseudostem of the main plant (the one left to grow and give fruit) is cut once the fruit has been collected as are the offshoots growing at the base of the plant except for one or two left to grow 2 to 3 meters and produce more fruit after one year. In this way there is a continuous recycling of the crop and therefore an endless source of fibre and cellulose.

The pseudostem's ligno- cellulose residue shows a low lignin contents (aprox. 10%) compared to other more traditional paper- pulp sources and it is used for paper and cardboard manufacturing.

The fibre is of ligno- cellulose nature composed by helically wound cellulose micro fibrils in an amorphous matrix of lignin and hemicellulose. It has a diameter ranging from 0,1 to 0,2 mm and the mechanical behaviour is similar in some aspects to glass fibre. (Samrat Mukhopadhyay, Raul Fangueiro, Yusuf Arpaç, Ülkü 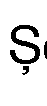 entürk "Banana Fibres - Variability and Fracture Behaviour" Journal of Engineered Fibres and Fabrics, Volume 3, Issue 2-2008).

The main drawback in using the pseudostems to provide the fibre is their high water content (aprox. 85%) and a very low dry fibre content (2- 4 %) reason why it has been uneconomical to extract it except in countries where labour intensive extraction and collection is cheap. This is the reason why the discarded pseudostems and the offshoots are frequently left in place to decompose after having been cut, in what can become an environmental hazard, or given to some extent to animals as a complement to their diet.

Common methods used to extract fibres use fuel- driven mechanical decorticators or manual de- fibering (both intensive operator labour processes) after the heavy pseudostems have been collected and transported to the place where the "wet" extraction will take place.

This is also a very contaminating process in which the sap of the plant, lignin and fragments of cellulose are discarded and the obtained fibres will be further treated with soda solution, rinsed in water and dried being spun into yarn.

This fibre is used mainly in the textile industry in combination with other fibres (cotton, polyester etc.) to improve its characteristics.

The usage of natural cellulose fibres offers abundant, low cost, light weight, sound dampening, biodegradable reinforcement materials with reasonable modulus and tensile strengths useful for the construction, automotive, marine, sports and acoustic industries.

Nevertheless the usage of pseudostem fibres to produce polyester composites has been limited due to the incompatibility of fibre surface/ polyester interface polarity, water absorption and low thermal stability and the drawback of using non- biodegradable matrixes such as polyesters, epoxi, vinyl ester thermoset resins.

A way to overcome this limitation has been found on the synthesis of bio-based polymers. By converting biomass abundant components such as starch, plant oils, resins, lactic acid etc. into polymers a large number of possibilities exist.

One such possibility is found with plants ligno- cellulose.

There has been for some time several ways to dissolve ligno- cellulose wastes in organic solvents, also known as liquefaction, by reacting it with different types of organic solvents to obtain a polyol's rich solution, and using this product in turn to produce different substances such as oils, polyesters or polyurethanes.

Solvents used are phenols, polyhydric alcohols (such as ethylene glycol, polyethylene glycol, diethylene glycol, glycerol etc.), acetic acid, caprolactone, cyclocarbonates, ammonia etc. alone or in combination at different temperatures and pressures with or without catalysts (Acta chim. Slov. 2005, 52, 253-258) usually in the proportions of 1:1 to 1:5 by weight (residue: solvent); (BioResources, Vol 1, No 2 (2006)), (Cellulose Volume 16, Number 3, 393-405), (ep 0472474 (a1)), (jp 8225653 (a)), (ep 2322588 (a1)), (si 21883 (a)), (jp11279563 (a)), (ep2322588(a1)).

These methods have different efficiencies at the time of liquefying lignocellulose as on one hand there seems to be co- precipitation in reactions between lignin and cellulose degradation products (J. applied polymer science, vol.115, 1265-1271 (2010)) and on the other hand different substances have different solubility (J. Phys. Chem. Ref. data, vol. 35, no. 1, 2006) typically the order is starch > hemicellulose> lignin > crystalline cellulose. Finally different plant residues have also different solubility in different solvents.

The partial liquefaction of ligno- cellulose in polyhydric alcohols produces a liquid with a high content of molecules with hydroxyl groups arising from the degraded constituents (lignin, hemicellulose and cellulose) and the unreacted solvent (Bioresource technology 100, 2009, 3316-3323).

In this heterogeneous polyol's solution the hydroxyl groups can be bridged by esterification reactions with multifunctional carboxylic acids or cyclic acid anhydrides to form biodegradable polyesters (Applied biochemistry and biotechnology, vol. 129-132).

Polyesters have been made from corn stover and black poplar which in turn have been used to make polyurethanes (si 21882 (a)), (wo 2004011518 (a2)), (us2011054059 (a1)).

However up to now, no unsaturated polyesters or acrylic reactive adhesive resins have reportedly been made from the musa genus residual pseudostems which could be further cross linked and harden by free radical polymerization reactions to form composites with their own fibres in a short reaction time and at a temperature which would not damage the fibres (<100°C).

This technique would take advantage of the good properties of the fibre of the pseudostem as well as of the remaining ligno- cellulose in which it's embedded to make an economical biodegradable fibre reinforced composite material.

### Summary of invention

According to the invention the method for producing fibre reinforced composite materials from musa genus pseudostems comprises:
1. The extraction of the fibre from the pseudostem.
2. The production of a reactive adhesive reactive resin from the pseudostem.
3. The addition of an initiator catalyst to the reactive adhesive resin from 2. and mixing with the fibre from 1. to harden and produce a fibre reinforced composite material.

In another preferred embodiment, step (1.) comprises the drying of the pseudostems prior to the extraction of the fibres by mechanical means.

In another preferred embodiment, step (2.) comprises obtaining a fine ligno- cellulose fine powder from the pseudostem.

In another preferred embodiment, step (2.) comprises liquefying a fine ligno- cellulose fine powder obtained from the pseudostem with polyhydric alcohols and an inorganic acid as a catalyst to produce a polyol's solution.

In another preferred embodiment, step (2.) comprises esterifing the polyol's solution obtained from the pseudostem with unsaturated monocarboxylic acids/ anhydrides to produce a reactive adhesive resin.

In another preferred embodiment, step (2.) comprises esterifying the polyol's solution obtained from the pseudostem with unsaturated dicarboxylic acids/ anhydrides to produce a reactive adhesive resin.

In another preferred embodiment, step (2.) can include the addition of styrene.

In another preferred embodiment, step (3.) comprises adding an initiator peroxide compound to the reactive adhesive resin and mixing with the fibres to produce a fibre reinforced composite material.

In another preferred embodiment, step (3.) comprises adding an initiator catalyst such as an aliphatic azo compound to the reactive adhesive resin and mixing with the fibres to produce a fibre reinforced composite material.

### Technical Problem

The present invention was made in view of the prior art described above, and the object of the present invention is to provide a practical method capable of producing biodegradable fibre reinforced composite materials from the abundant musa genus pseudostems agricultural wastes available around the world in a way which could use the fibres from the musa pseudostems with an adhesive obtained from the same source.

### Solution to Problem

To solve the problem, the present invention provides a method for separating the fibres from the lignocelullose matrix of the pseudostem and using the later to synthesize a reactive adhesive resin that could encapsulate the fibres obtained producing a fibre reinforced composite material.

### Advantageous effect of invention

The main advantages of the invention include:
1. These methods to produce composite materials have the advantage of economically using both the fibre and ligno- cellulose matrix from a large resource such as the musa genus pseudostem's wastes to produce a biodegradable material in contrast to other methods which just use fibre or the ligno- cellulose of the plant.
2. The obtained adhesive resin can be moulded with the fibres to produce tailor made composite materials at shorter curing (hardening) time's and lower temperatures compared to other methods that require longer curing times or exposure to higher temperatures and pressure which could damage the fibres.
3. In contrast to other methods, during the hardening reaction of the reactive adhesive resin to conform the matrix of the composite material, no water is produced, as in esterification reactions (wo 2004011518), which would be absorbed by the pseudostem fibres and thus impair the final mechanical characteristics of the fibre reinforced composite.
4. In contrast to other methods, the reactive adhesive resin hardens by the molecular crosslinking of the available double bonds produced by free radical induced polymerization reactions initiated by adding a small amount of an initiator compound and not by an esterification reaction which requires a more precise mixing of the reactants, in larger quantities and usually in different states (solid/ liquid).

### Brief description of drawings

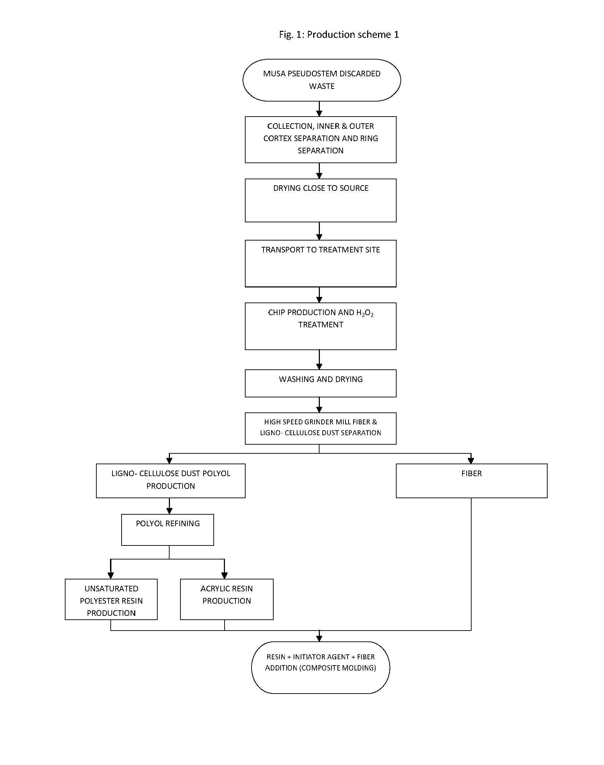

Fig. 1: is a production scheme in which the pseudostem's inner and outer cortex are treated together before the fibre and ligno- cellulose powder separation.

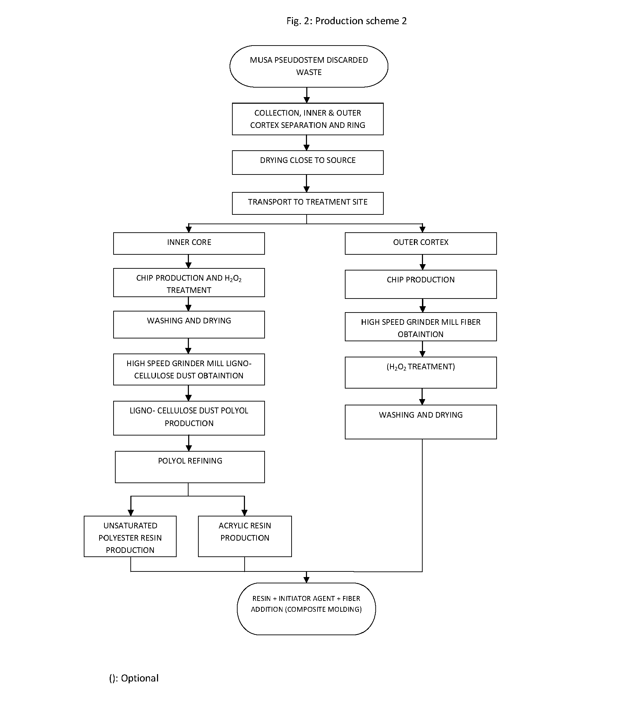

Fig. 2: is a production scheme in which the pseudostem's inner and outer cortex (with different types of fibres) are separated and therefore follow a different treatment.

### Description of embodiments

Hereinafter, the best mode for carrying out the present invention is described in detail.

In one embodiment of the invention the pseudostem is dehydrated before fibre extraction to facilitate handling. In order to avoid insect attack and rotting, the pseudostem should be collected for drying before two to three days after cutting and the lower part in contact with the ground discarded. The upper part where the leaves emerge is also discarded making a cylinder shaped trunk.

The pseudostem cylinders are cut into ring segments of 1 to 2 cm length and the inner core (which has a thinner fibre) is separated from the outer cortex. The ring shaped sections obtained in this way are left for a few weeks to lose water by evaporation in the sun or placed in habilitated green houses with the appropriate ventilation always trying to avoid rotting and larvae and insect predation. Alternatively the dehydration can be done faster by placing them in convection ovens with air circulating at 80°C for 24- 36 hrs, depending on relative humidity.

The ring sections will lose up to 85% of their weight after dehydration.

The structure of the musa's pseudostem made up of an inner floral core with very thin fibres and outer cortex formed by the concentric assemblement of the leaf sheaths and thicker fibres, allows having two different pathways to obtain the fibre and the ligno- cellulose powder used to make the composite material.

In the first pathway the dried outer segments and inner core are cut into square- shape chips and treated by immersion in hydrogen peroxide solutions (10- 30%) for 2- 3 days and then rinsed in water to remove starch and lignin and therefore:
- Improve the posterior fibre- matrix interface.
- Improve efficiency of liquefaction in polyhydric alcohols (solvent).

After rinsing the chips are dehydrated in an air convection oven with air circulating at 80°C for 24- 36 hrs.

Once dehydrated the outer cortex and inner core chips are placed in high speed blade grinder mills (20000- 30000 rpm) where different sizes of fibre and a ligno- cellulose powder residue are obtained.

The fibre and the ligno- cellulose powder are separated by mechanical sieving thus classifying the fibre into different lengths at the same time.

In the second pathway, to obtain the fibre and the ligno- cellulose powder, the fibre is extracted separately from the outer cortex chips with the mill before treatment in hydrogen peroxide solution in order to improve the fibre yield and use less hydrogen peroxide. The inner core chips are treated separately in hydrogen peroxide solution in the same order as before and are employed to obtain the ligno- cellulose powder after milling.

In one embodiment of the invention, this ligno- cellulose powder obtained is used in turn for the synthesis of unsaturated polyester/ acrylic resins by first liquefying in organic solvents, preferably polyhydric alcohols, with a strong mineral acid as a catalyst and then reacting the resultant polyol's solution with unsaturated dicarboxylic acid/ anhydride or monocarboxylic acids.

These polyhydric alcohols can be: ethylene glycol, diethylene glycol, polyethylene glycol, propylene glycol, dipolypropylene glycol, glycerol etc. alone or in combination.

During the time of liquefaction a great amount of water is distilled off produced from the breakdown of cellulose and lignin and the reaction of ethylene glycol with these products such as the d- glucose units to form 2-hydroxyethyl-d-glucopyronoside.

The viscosity of the resulting polyol's solution increases as the chain length of the polyhydric alcohol does for the same reaction conditions.

The liquefaction reaction does not dissolve the ligno- cellulose dust totally and about 10% of solid residue is obtained. These solid residues consisting of non- dissolved fragments, re- precipitated particles and colloidal particles produced in the reaction are separated by centrifuging and/or filtration.

To synthesize the unsaturated polyesters and acrylic resins, a ratio of 1 mol of KOH measured of the polyol solution to 0,5- 1 mol of organic acid is used. The lower the ratio of O.A./P.O. the lower the stiffness of the resulting material. Similarly the higher ligno- cellulose to organic solvent ratio results in a higher flexibility modulus of the final composite matrix and a lower stiffness.

Unsaturated polyesters are synthesized by melt condensation of the obtained polyol's solution with maleic anhydride and phtalic anhydride under nitrogen atmosphere. These unsaturated polyesters are further diluted with styrene to make a reactive resin ready for subsequent free radical induced polymerization reactions and crosslinking of the available double bonds with styrene.

To initiate the hardening reaction a peroxide initiator and a polymerization promoter such as Cobalt (II) naphthenoate are needed before curing for several hours at a temperature of about 80°C.

The conversion of the inert hydroxyl group terminals contained in the molecules making up the polyol's solution into potentially reactive terminals that could crosslink and harden into a composite matrix can also be achieved without the need of a third bridging molecule (e.g. styrene) by the addition through an esterification reaction with a short monocarboxylic acid containing a reactive double bond.

The addition of the reactive double bond to the hydroxyl group terminals contained in both the so called "excess solvent free liquefied wood" and the unreacted solvent was found to be enough for the crosslinking and hardening of the solution upon the addition of a peroxide initiator.

In this case a reactive acrylic resin was synthesized by the esterification reaction of methacrylic acid with the polyol's solution. The solution hardened into a stiff solid with the addition of a common peroxide initiator such as 2- butanone peroxide. The polyol's solution esterified by using acrylic acid instead of its relative methacrylic acid hardened, as expected, into a soft rubbery solid with a high water production.

The absence of a diluting styrene in the acrylic reactive resin allows achieving a higher concentration of ligno- cellulose in the final formula compared to the resin obtained with the unsaturated dicarboxylic acids formula but instead the resin is more prone to the Trommsdorff effect, or autoacceleration effect. This effect is diminished by the addition of an aromatic copolymer in small concentrations.

The esterification reaction of the polyol's solution with unsaturated dicarboxylic acids and monocarboxylic acids leads to the formation of different types of molecules with different numbers of available reactive double bonds for crosslinking and hardening. The reaction is activated by an initiator compound and will finally produce an amorphous thermoset matrix with no glass transition temperature Tg.

In one embodiment of the invention the fibre and the reactive adhesive resins thus obtained from the pseudosteams are used for the formation of light weight biodegradable composite materials.

The resulting material is made up of approximately 20-50 % fibre and 50-80 % adhesive resin (from which 10- 25 % is liquefied ligno- cellulose powder from the pseudostem) by weight with good fibre- matrix adhesion.

These composites can be biodegraded by grinding, burial and composting where the material is converted into organic matter by microorganisms or incinerated taking advantage of their high calorific value and low sulphur content.

### Examples

The following examples are provided to make a better illustration of the invention and not intended to limit the content as disclosed in the invention thereto.

In example 1 the inner core and outer cortex from the pseudostem are separated close to the plant and cut into ring shaped sections to facilitate drying. The loss of up to 85% of its weight due to the elimination of water through evaporation makes the transportation more economical to a treatment site where both inner core and outer cortex ring shaped sections can be further cut into chips and treated with a hydrogen peroxide solution in order to reduce the contents of starch, lignin and hemicelluloses.

The chips treated in this way are fitted into high speed blade grinder mills where the fibres and ligno- cellulose powder are separated.

In example 2 the inner core and outer cortex of the pseudostem follow different treatments. Here the inner core is used only to obtain the lignocellulose powder whereas the outer cortex is used to obtain the fibres which will be used for the final composite. This second process has de advantage of allowing reducing the hydrogen peroxide treatment. The obtained ligno- cellulose from the milling of the outer cortex chips would be discarded.

It was observed that the ligno- cellulose powder obtained in either way was best liquefied in a mixture of ethylene glycol and glycerol due to the viscosity of the end product. Other polyols such as diethylene glycol and polyethylene glycol gave solutions too viscous to produce a reactive resin which could wet the fibres efficiently. The hydroxyl number was also reduced with an increase in chain length.

In example 3 a mixture of ethylene glycol and glycerol with sulphuric acid as a catalyst is used to produce the polyol's solution and the hydroxyl number is measured to determine the proportions of dicarboxylic acids, anhydride or methacrylic acid needed for the following esterification reactions. The synthesis of the reactive resin is done after refining the polyol's solution by centrifugation and filtration.

The unsaturated polyester resin is synthesized according to known methods of organic synthesis. The molecules of styrene act by bridging the polyester chains at the points of unsaturation and hardening the resin on the addition of a peroxide initiator. In example 4 the refined polyol's solution is esterified by melt condensation with maleic anhydride at 180-190°C and then diluted in styrene. In this example a fibre reinforced composite material containing 20% fibre was obtained by mixing the fibre and the unsaturated polyester resin in a mould with no compression. Higher fibre amounts could be added by applying compression moulding.

The hardening of the unsaturated polyester resin needs to be promoted by the addition of a catalyst such as cobalt (II) naphthenoante and an initiator peroxide such as 2- butanone peroxide or dibenzoyl peroxide before curing at 80° C for 2- 3 hours.

Similarly the addition of an aliphatic azo compound such as azobisisobutryronitrile (AIBN) will do the function of the peroxide as a radical initiator to start up the reaction.

In a similar way, in example 5, the polyol's solution is esterified with methacrylic acid using an azeotropic distillation with a low boiling point organic solvent to facilitate the removal of water produced during the reaction. Such solvents could be toluene, benzene, cyclohexane, ethylene dichloride, heptanes, pentane etc. which once used in the reaction can be recovered. Like in example 4 a 20% fibre reinforced composite material was obtained by mixing the fibre and acrylic resin in a mould with no compression. A higher fibre percentage could be added by applying higher compression moulding.

Unlike the unsaturated polyester reactive adhesive resin the acrylic resin hardens quite rapidly on the addition of a peroxide initiator such as 2-butanone peroxide at room temperature without the need of any catalyst, in fact the addition of a small amount of an aromatic co- monomer, such as styrene, is needed to the avoid a rapid auto- acceleration reaction. Alternatively a pre- polymerized resin could be prepared by the addition of an insufficient quantity of initiator for it to polymerize completely.

### Example 1: Pseudostem treatment and fibre and ligno- cellulose powder obtaining (1).

The discarded pseudostem after fruiting is cut with a standard saw at the level where the upper leaves emerge and so are the roots (rhizome), in contact with the soil, leaving a cylinder shape trunk. The discarded offshoots follow the same process. The outer cortex of the pseudostem cylinder and the inner core, with higher density, are cut into ring- shaped sections of 2.5- 3.5 cm (maximum fibre length).

These sections are dehydrated by drying in air circulating oven at 80°C for 48 hours.

The dried sections are stored in standard conditions of approximately 50-60% humidity and 22-25°C for a few days to facilitate the mechanical separation and further chemical treatment. The leaf sheaths forming the pseudostem cortex and the inner core can thus be easily manually separated and then cut into chips pieces of 2.5-3.5 x 2 cm.

The chips are immersed in hydrogen peroxide solution (10- 30%) at room temperature giving it occasional stirring to mix the reactant.

After 2- 3 days the chips are soaked in water to remove most of the hydrogen peroxide before drying.

Drying is done in an air circulating ovens at 80°C for 24- 48 hours and then allowed to cool to ambient temperature and humidity.

The conditioned chips are fitted into a conventional high speed blade grinder mills (with speed up to 20,000 rpm) to obtain the fibres and the ligno- cellulose powder. This process takes only 10- 15 seconds to separate the fibres from the ligno- cellulose matrix and makes the low density cellulose fibres blow on top of the of the blades, as soon as they are liberated from the ligno- cellulose matrix, leaving a ligno- cellulose powder at the bottom of the mill.

By this method only those good quality fibres are separated as they can withstand the centrifugal force and cutting blades, any brittle fibres are broken down into fragments and collected as ligno- cellulose powder.

The ligno- cellulose powder is separated from the fibres by mechanical sieving (<0,5 mm). And the fibres are further separated into different lengths (2,5 1,25 and 0,5 mm mesh sizes). Shorter fibres and coarse lingo- cellulose powder is grinded with a standard flour mill to obtain more cellulose powder.

### Example 2: Pseudostem treatment and fibre and ligno- cellulose powder obtaining (2).

The pseudostem has the same treatment as in example 1. but in order to improve the fibre yield the inner core is separated from the outer cortex and treated separately after drying. The leaf sheaths forming the outer cortex are likewise separated, cut into chips pieces 2.5-3.5 x 2 cm. and fitted into high speed blade grinder mill for 10- 15 seconds. The fibres are classified by size with mechanical sieves and then treated in hydrogen peroxide solution to condition their surface if needed.

The inner cortex on the other hand is also cut into chips which are treated directly in hydrogen peroxide solution to reduce the lignin contents and then rinsed in water. The chips are then dried and grinded with a mill to obtain the cellulose powder which will be used to make the polyol's solution.

### Example 3: Polyol production treatment & characterization.

The ligno- cellulose powder obtained before is liquefied in a solution containing ethylene glycol with 10% glycerol in a ratio of 1:2 with a 3% of concentrated sulphuric acid to the weight of the solvent. The lignocellulose powder is added gradually over a period of 30 minutes to the warm solvent and catalyst at a temperature of approximately 160°C stirring with a mechanical agitator at 200 rpm. Water is produced as soon as the powder is added to the warm solution and it is removed from the solution which initially turns red. The mix is stirred for a further hour at a temperature of 160-170°C at atmospheric pressure. After this period of time most of the initial ligno- cellulose powder has been dissolved forming a black viscous liquid.

The water colloids and undissolved solids remaining in solution are separated by using a high speed centrifuge at 4,000 rpm for 30 minutes and then purified further by filtration with a 0,025 mm stainless steel filter and a vacuum pump. From the filtered product it can be calculated a liquefied fraction of up to 90% and a undissolved residual fraction of approximately 10% by weight composed of re-precipitated solids, water colloids and unreacted crystalline cellulose.

The OH- number of the resultant refined polyol's solution is determined by known practise methods. In this case the hydroxyl groups contained in solution were acetylated with acetic anhydride in a pyridine solution and the resultant acid titrated against NaOH in an acid- base titration with the aid of a pH meter thus the end point is established at pH 10. The obtained value gave a concentration of 458.32 mg KOH/ g.

### Example 4: Resin synthesis - method 1

The synthesis of the unsaturated polyester is carried out by melt condensation reaction under nitrogen atmosphere using the equivalent of 1 mol KOH of the obtained polyol's solution to ½ mol maleic anhydride and ½ mol phtalic anhydride and 0.01% hydroquinone to prevent premature polymerization.

The esterification reaction takes place with water removal at 180- 190°C, atmospheric pressure and 200 rpm mechanical stirring.

After three hours the acid number measured has fallen to 50 and the reaction is allowed to cool to 140°C. At this temperature the reaction is quenched with the equivalent of 1 mol of styrene which is added over a period of 1 minute with rapid stirring (300 rpm) and then further cooled down to room temperature in a water bath to obtain a black viscous liquid.

The reactive adhesive resin composed by unsaturated polyesters and styrene is prepared for crosslinking and hardening by adding 0.2% 2-butanone peroxide as catalyst and 0.6% 10% Cobalt (II) naphthenoate as an initiator.

The pseudostem fibre obtained previously is added to the prepared resin in random orientated chopped strands as matrix reinforcement in 20% weight to the weight of the reactive adhesive resin and placed into a mould.

The resin and fibres harden by curing using compression molding at a temperature of 80°C for three hours.

The final composition of the fibre reinforce composite would be:

**Table 1**

| | % in resin | % TOTAL |
|---|---|---|
| Pseudostem lignocellulose powder | 11.59 | 9.04 |
| Ethylene glycol | 20.87 | 16.27 |
| Glycerol | 2.32 | 1.81 |
| Sulphuric acid | 0.69 | 0.54 |
| Maleic anhydride | 13.93 | 10.86 |
| Phtalic anhydride | 21.03 | 16.40 |
| Styrene | 29.56 | 23.05 |
| 10% Cobalt (II) naphthenoate | | 0.47 |
| 0.2% 2- butanone peroxide | | 1.56 |
| Pseudostem fibre | | 20.00 |
| TOTAL: | | 100.00 |

| | | |
|---|---|---|
| 1. Total pseudostem used in formula: 29% | | |

Example 5: Resin synthesis - method 2

The acrylic reactive resin is synthesized by azeotropic distillation using cyclohexane as organic solvent entrainer to facilitate water removal from the reaction.

A ratio of 1 mol of KOH equivalent of the polyol's solution to 1 mol of methacrylic acid is used with 10% excess.

The polyol's solution is mixed with approximately 150% of cyclohexane to the weight of the methacrylic acid used, 0,4% hydroquinone to prevent premature polymerization reaction and 2% of concentrated sulphuric acid as a catalyst.

The reaction is carried out at approximately 90°C in a nitrogen atmosphere at atmospheric pressure and 200 rpm mechanical stirring. Methacrylic acid is added drop wise for about 30 minutes and the esterification reaction allowed to proceed for about 3 hours, when the expected water from the reaction has been collected.

Cyclohexane is collected through evaporation by letting the temperature rise up to 140 °C with stirring at 300 rpm. The cyclohexane is purified and used in further reactions. The reaction product is cooled in a water immersion bath yielding a black glossy liquid as the final product.

To avoid a rapid Trommsdorff effect, or gel effect, a small amount of an aromatic co- monomer such as styrene (1-1,5%) is added to the resulting acrylic resin.

Hardening of the resin by free radical induced polymerization of the resin takes place with the addition of 0.2% 2- butanone peroxide with warming and solidifying after 10- 15 minutes at room temperature.

The pseudostem fibre obtained previously is added before this time to the resin in random orientated chopped strands as matrix reinforcement in a 20% weight to the weight of the reactive adhesive resin and placed into a mould.

The final composition of the fibre reinforce composite would be:

**Table 2**

| | % in resin | % TOTAL |
|---|---|---|
| Pseudostem lignocellulose powder | 18.25 | 14.29 |
| Ethylene glycol | 32.82 | 25.70 |
| Glycerol | 3.65 | 2.86 |
| Sulphuric acid | 1.93 | 1.51 |
| Methacrylic acid | 42.35 | 33.16 |
| Styrene | 1.00 | 0.78 |
| 0.2% 2- butanone peroxide | | 1.57 |
| Pseudostem fibre | | 20.00 |
| TOTAL: | | 100.00 |

| | | |
|---|---|---|
| 1. Total pseudostem used in formula: 34% | | |

### Patent literature

EP 0472474 A

WO 2004/011518 A

J P 8225653 A

SI 21882

SI 21883

US 2011054059 A

JP 11279563 A

EP 2322588 A

### Non-patent literature

LINGYUN LIANG, ZHIHUAI MAO, YEBO LI, CAIXIA WAN, TIPENG WANG, LIANHUI ZHANG, LINGYAN ZHANG. Liquefaction of crop residues for polyol production. Bioresource. 2006.

ANDREJ KRZAN, MATJAZ KUNAVER, VESAN TISLEER. Wood liquefaction using dibasic organic acids and glycols. Acta chim. Slov. . 2005, vol.52, p.253-258.

FEI YU, YUHUAN LIU, XUEJUN PAN, XIANGYANG LIN, CHENGMEI LIU, PAUL CHEN, ROGER RUAN . Liquefaction of corn stover and preparation of polyester from the liquefied polyol. Applied biochemistry and biotechnology. 2006, vol.129-132.

FRANC BUDIJA, CRTOMIR TAVZES, LUCIJA ZUPANCIC-KRALJ, MARKO PETRIC. Self-crosslinking and film formation ability of liquefied black poplar. Bioresource technology. 2009, vol. 100, p.3316-3323.

MATJAZ KUNAVER, EDITA JASIUKAITYTE, NATASA CUK, JAMES T. GUTHRIE. Liquefaction of wood, synthesis and characterization of liquefied wood polyester derivatives. Journal of applied polymer science. 2010, vol.115, p.1265-1271.

ARI L. HORVARTH . Solubility of structurally complicated materials: I. wood. J. Phys. Chem. . 2006, vol.35, no.1.

EDITA JASIUKAITYTĖ, MATJA 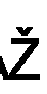 KUNAVER AND MATIJA STRLI 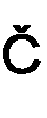 **.** Cellulose liquefaction in acidified ethylene glycol. Cellulose . 2009, vol.16, no.2.

SAMRAT MUKHOPADHYAY, PAUL FANGUEIRO, YUSUF ARPAÇ, ÜLKÜ 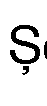 ENTÜRK. Banana Fibres - Variability and Fracture Behaviour. Journal of Engineered Fibres and Fabrics. 2008, vol.3, p.Issue 2.

## Claims

1. A method for producing fibre reinforced composite materials from musa genus pseudostems comprising: a) The extraction of the fibre from the pseudostem, b) The production of a reactive adhesive resin from the pseudostem, c) The addition of an initiator catalyst to the reactive adhesive resin from b) and mixing with the fibre from a) to harden and produce a fibre reinforced composite material.

2. The process of Claim 1, wherein step (a) comprises the drying of the pseudostems prior to the extraction of the fibres by mechanical means.

3. The process of Claim 1, wherein step (b) comprises obtaining a fine lignocellulose fine powder from the pseudostem.

4. The process of Claim 1, wherein step (b) comprises liquefying a fine lignocellulose fine powder obtained from the pseudostem with polyhydric alcohols and an inorganic acid as a catalyst to produce a polyol's solution.

5. The process of Claim 1, wherein step (b) comprises esterifing the polyol's solution obtained from the pseudostem with unsaturated monocarboxylic acids/ anhydrides to produce a reactive adhesive resin.

6. The process of Claim 1, wherein step (b) comprises esterifing the polyol's solution obtained from the pseudostem with unsaturated dicarboxylic acids/ anhydrides to produce a reactive adhesive resin.

7. The process of Claim 1, wherein step (b) can include the addition of styrene.

8. The process of Claim 1, wherein step (c) comprises adding an initiator catalyst such as a peroxide compound to the reactive adhesive resin and mixing with the fibre to produce a fibre reinforced composite material.

9. The process of Claim 1, wherein step (c) comprises adding an initiator catalyst such as an aliphatic azo compound to the reactive adhesive resin and mixing with the fibre to produce a fibre reinforced composite material.
